# EUROPEAN PATENT APPLICATION

(11) **EP 4 583 271 A2**
(43) Date of publication of application: **09.07.2025**
(21) Application number: 24223336.9
(22) Date of filing: 27.12.2024
(51) Int. Cl.: H01M 50/209, H01M 50/296, H01M 50/502, H01M 50/51

(54) **ENERGY STORAGE SYSTEM**

(30) Priority: 04.01.2024 KR 20240001533
(71) Applicant: SAMSUNG SDI CO., LTD., Yongin-si, Gyeonggi-do 17084 (KR)
(72) Inventor: Lee, Joo Yul, 16678 Suwon-si, Gyeonggi-do (KR)
(74) Representative: Gulde & Partner

(57) **Abstract**

An energy storage system is provided having reduced overall length of bus bars that are configured to connect a plurality of battery modules and a minimized difference in length between the bus bars. The energy storage system including a battery module stack including a plurality of first battery modules and a plurality of second battery modules alternately arranged in a first direction, a first module bus bar configured to electrically connect a pair of first battery modules disposed adjacent to each other among the plurality of first battery modules with one second battery module interposed therebetween, a second module bus bar configured to electrically connect a pair of second battery modules disposed adjacent to each other among the plurality of second battery modules with one first battery module interposed therebetween, and a third module bus bar configured to electrically connect one of the first battery modules and one of the second battery modules that are arranged adjacent to each other.

## Description

### BACKGROUND

### 1. Field

The present disclosure relates to an energy storage system.

### 2. Description of the Related Art

In general, an energy storage system (ESS) is a system that can store surplus electricity or store electricity produced using renewable energy. An energy storage system includes a plurality of battery modules, a rack supporting the plurality of battery modules, and a module bus bar electrically connecting the plurality of battery modules.

The overall length of the module bus bar may be increased due to factors such as the location of a module terminal provided in the battery module, the arrangement of the plurality of battery modules, and the location of a battery control unit (BCU), which may increase manufacturing costs of the energy storage system, increase power consumption due to increased electrical resistance, and cause an imbalance in electrical resistance.

The above-described information disclosed in the technology that forms the background of the present disclosure is only intended to improve understanding of the background of the present disclosure, and thus may include information that does not constitute the related art.

### SUMMARY OF THE DISCLOSURE

The present disclosure is directed to providing an energy storage system capable of reducing the overall length of bus bars configured to connect a plurality of battery modules, and minimizing a difference in length between the bus bars.

These and other aspects and features of the present disclosure will be described in or will be apparent from the following description of some embodiments of the present disclosure.

According to an aspect of the present disclosure, there is provided an energy storage system including a battery module stack including a plurality of first battery modules and a plurality of second battery modules alternately arranged in a first direction, a first module bus bar configured to electrically connect a pair of the first battery modules that are disposed adjacent to each other with one of the second battery modules interposed therebetween, a second module bus bar configured to electrically connect a pair of that second battery modules disposed adjacent with one of the first battery modules interposed therebetween, and a third module bus bar configured to electrically connect one of the first battery modules and one of the second battery modules arranged adjacent to each other.

The energy storage system may further include a battery control unit configured to control charging and discharging of the battery module stack, a first control unit bus bar configured to electrically connect the battery control unit and one of the first battery modules that is closest to the battery control unit among the plurality of first battery modules, and a second control unit bus bar configured to electrically connect the battery control unit and one of the second battery module that is closest to the battery control unit, among the plurality of second battery modules.

The battery control unit may be positioned outside the battery module stack in the first direction, and the third module bus bar may connect a first battery module of the plurality of first battery modules that is farthest from the battery control unit and a second battery module of the plurality of battery modules that is farthest from the battery control unit.

Each of the first battery modules may include a first positive electrode module terminal and a first negative electrode module terminal, each of the second battery modules may include a second positive electrode module terminal and a second negative electrode module terminal, a plurality of the first module bus bars is provided and each of the first module bus bars may connect the first positive electrode module terminal of one of the pair of first battery modules disposed adjacent to each other with one second battery module interposed therebetween, to the first negative electrode module terminal of the other one of the pair of first battery modules, and a plurality of the second module bus bars is provided and each of the second module bus bars may connect the second positive electrode module terminal of one of the pair of second battery modules disposed adjacent to each other with one first battery module interposed therebetween, and the second negative electrode module terminal of the other one of the pair of second battery modules.

Each of the first positive electrode module terminals and the first negative electrode module terminals may be disposed on one side of the first battery module in a second direction crossing the first direction, and each of the second positive electrode module terminals and the second negative electrode module terminals may be disposed on the other side of the second battery module in the second direction.

Each of the first battery modules may further include a first module case on which the first positive electrode module terminal and the first negative electrode module terminal are provided, each of the second battery modules may further include a second module case on which the second positive electrode module terminal and the second negative electrode module terminal are provided, and the first battery module is the same as the second battery module if the first battery module is rotated by 180° such that a first side surface and a second side surface of the first module case spaced apart from each other in the first direction are reversed.

The first battery module may further include a first module case on which the first positive electrode module terminal and the first negative electrode module terminal are provided, a plurality of first battery cells accommodated in the first module case, a plurality of first cell bus bars configured to electrically connect the plurality of first battery cells, and a first cell-module bus bar configured to electrically connect one of the plurality of first battery cells and one of the first positive electrode module terminal and the first negative electrode module terminal.

The first module case may include a first module vent that opens in a second direction crossing the first direction.

Each of the second battery modules may further include a second module case on which the second positive electrode module terminal and the second negative electrode module terminal are provided, a plurality of second battery cells accommodated in the second module case, a plurality of second cell bus bars configured to electrically connect the plurality of second battery cells, and a second cell-module bus bar configured to electrically connect one of the plurality of second battery cells and one of the second positive electrode module terminal and the second negative electrode module terminal.

The second module case may include a second module vent that opens in a second direction crossing the first direction.

According to another aspect of the present disclosure, there is provided an energy storage system including a plurality of battery modules arranged in a first direction, each of the plurality of battery modules including a first module terminal and a second module terminal, a first module bus bar configured to electrically connect the first module terminal of a first battery module of the plurality of battery modules and the first module terminal of a second battery module of the plurality of battery modules that is adjacent to the first battery module, a second module bus bar configured to electrically connect the second module terminal of the first battery module and the second module terminal of the second battery module, and a third module bus bar configured to electrically connect the first module terminal and the second module terminal of a third battery module of the plurality of battery modules.

The energy storage system may further include a battery control unit configured to control charging and discharging of the plurality of battery modules, a first control unit bus bar configured to electrically connect the first module terminal of one of the battery modules that is closest to the battery control unit to the battery control unit, and a second control unit bus bar configured to electrically connect the second module terminal of one of the battery modules that is closest to the battery control unit to the battery control unit.

The the one of the battery modules is disposed at one end side of the plurality of battery modules in the first direction and connected by the first control unit bus bar and the second control unit bus bar to the battery control unit, and the third module bus bar may connect the first module terminal and the second module terminal of the battery module disposed at the other end side of the plurality of battery modules in the first direction.

The first module terminal may be disposed on one side of the battery module in a second direction crossing the first direction, and the second module terminal may be disposed on disposed on the other side of the battery module in the second direction.

The first module terminal may include a first positive electrode module terminal and a first negative electrode module terminal, the second module terminal may include a second positive electrode module terminal and a second negative electrode module terminal, the first module bus bar may connect the first positive electrode module terminal of the first battery module and the first negative electrode module terminal of the second battery module, and the second module bus bar may connect the second negative electrode module terminal of the first battery module and the second positive electrode module terminal of the second battery module.

A first side of the third module bus bar may be connected to one module terminal of the first positive electrode module terminal and the first negative electrode module terminal of the third battery module, and a second side of the third module bus bar may be connected to one module terminal of the second positive electrode module terminal and the second negative electrode module terminal of the third battery module that has a polarity opposite to a polarity of the one module terminal connected to the first side.

Each of the battery modules may include a module case on which the first positive electrode module terminal, the first negative electrode module terminal, the second positive electrode module terminal, and the second negative electrode module terminal are provided, a plurality of first battery cells and a plurality of second battery cells accommodated in the module case, a plurality of first cell bus bars configured to electrically connect the plurality of first battery cells, a plurality of second cell bus bars configured to electrically connect the plurality of second battery cells, a first cell-module bus bar configured to electrically connect one of the plurality of first battery cells to one of the first positive electrode module terminal and the first negative electrode module terminal, and a second cell-module bus bar configured to electrically connect one of the plurality of second battery cells to one of the second positive electrode module terminal and the second negative electrode module terminal.

The plurality of first battery cells and the plurality of second battery cells may not be electrically connected in the module case.

The plurality of first battery cells and the plurality of second battery cells are arranged in the first direction in the module case.

The module case may include a module vent that opens in a second direction crossing the first direction.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a front view of an energy storage system according to a first embodiment of the present disclosure;
FIG. 2 is a perspective view illustrating a first embodiment of a first battery module included in FIG. 1;
FIG. 3 is a plan view illustrating a first embodiment of a plurality of first battery cells accommodated in a first module case illustrated in FIG. 2;
FIG. 4 is a front view illustrating the first embodiment of the plurality of first battery cells illustrated in FIG. 3;
FIG. 5 is a perspective view illustrating a first embodiment of a second battery module included in FIG. 1;
FIG. 6 is a plan view illustrating a first embodiment of a plurality of second battery cells accommodated in a second module case illustrated in FIG. 5;
FIG. 7 is a front view illustrating the first embodiment of the plurality of second battery cells illustrated in FIG. 6;
FIG. 8 is a plan view illustrating a second embodiment of the plurality of first battery cells accommodated in the first module case illustrated in FIG. 2;
FIG. 9 is a front view illustrating the second embodiment of the plurality of first battery cells illustrated in FIG. 8;
FIG. 10 is a plan view illustrating a second embodiment of the plurality of second battery cells accommodated in the second module case illustrated in FIG. 2;
FIG. 11 is a front view illustrating the second embodiment of the plurality of second battery cells illustrated in FIG. 10;
FIG. 12 is a perspective view illustrating a second embodiment of the first battery module included in FIG. 1;
FIG. 13 is a perspective view illustrating one embodiment of a plurality of first battery cells accommodated in a first module case illustrated in FIG. 12;
FIG. 14 is a perspective view illustrating a second embodiment of the second battery module included in FIG. 1;
FIG. 15 is a perspective view illustrating one embodiment of a plurality of second battery cells accommodated in a second module case illustrated in FIG. 14;
FIG. 16 is a front view illustrating an energy storage system according to a second embodiment of the present disclosure;
FIG. 17 is a perspective view illustrating one embodiment of a battery module included in FIG. 16;
FIG. 18 is a perspective view illustrating one example of a plurality of first battery cells and a plurality of second battery cells accommodated in a module case illustrated in FIG. 17 when viewed from one side; and
FIG. 19 is a perspective view illustrating the plurality of first battery cells and the plurality of second battery cells of FIG. 18 when viewed from the opposite side to that of FIG. 18.

### DETAILED DESCRIPTION OF EXEMPLARY EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

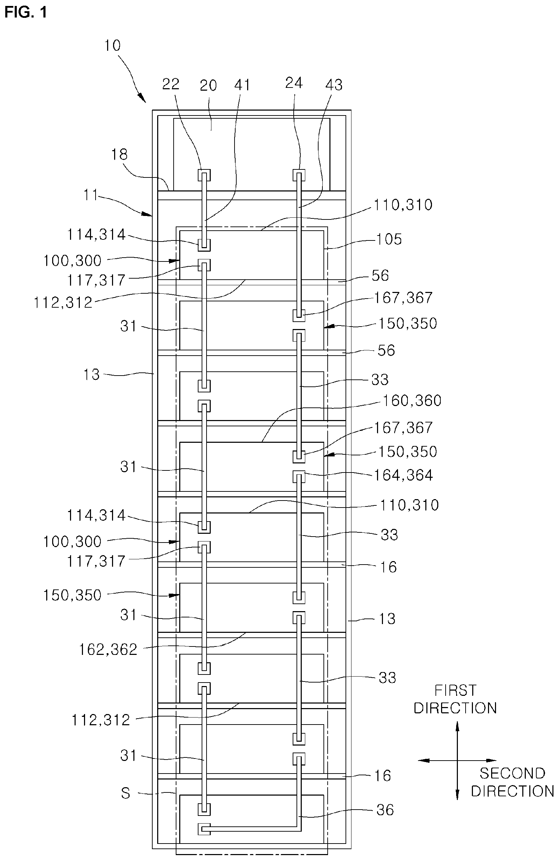

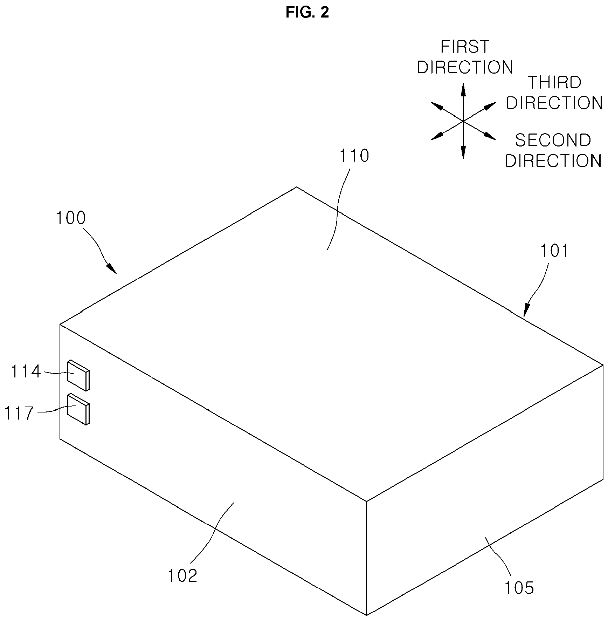

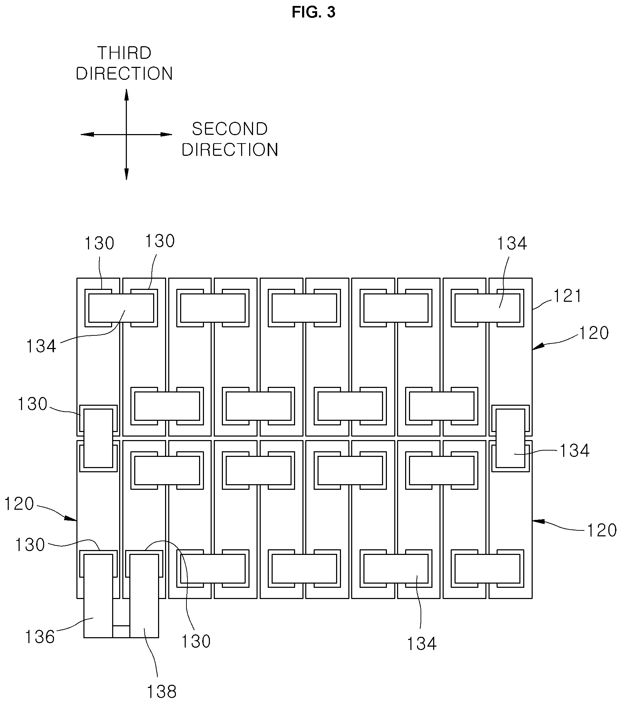

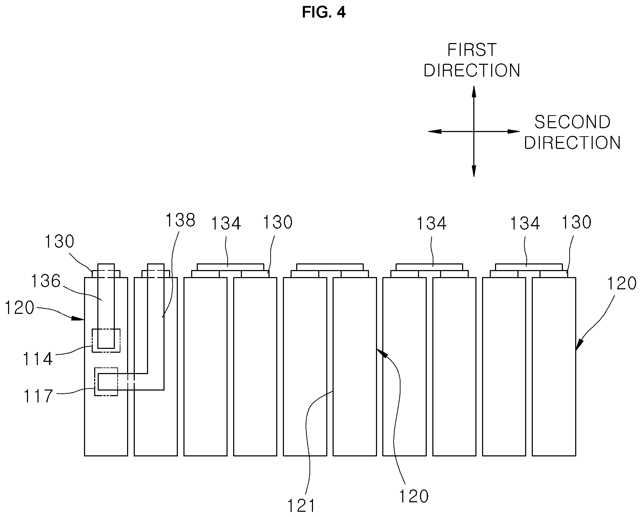

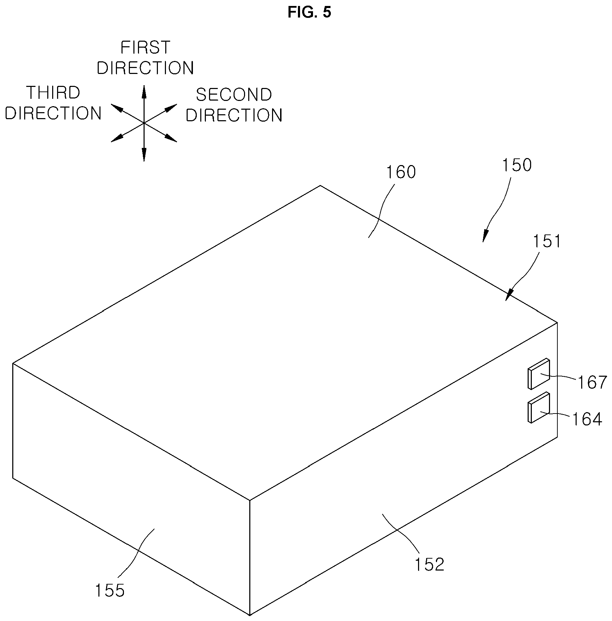

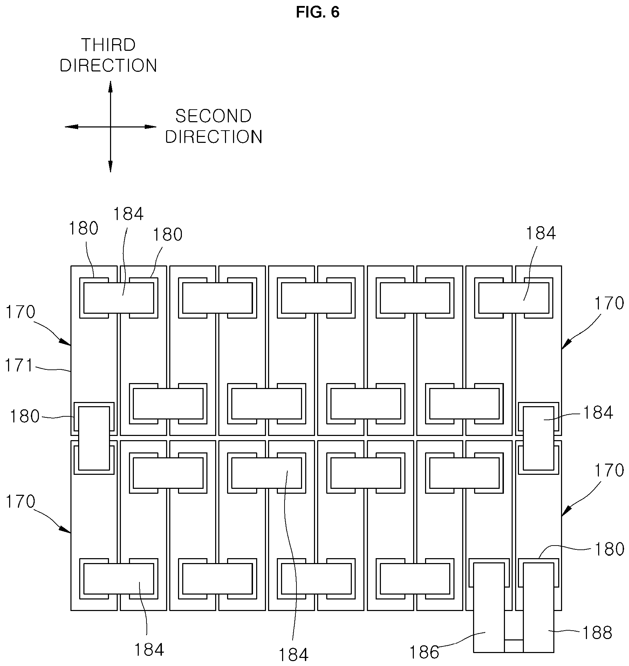

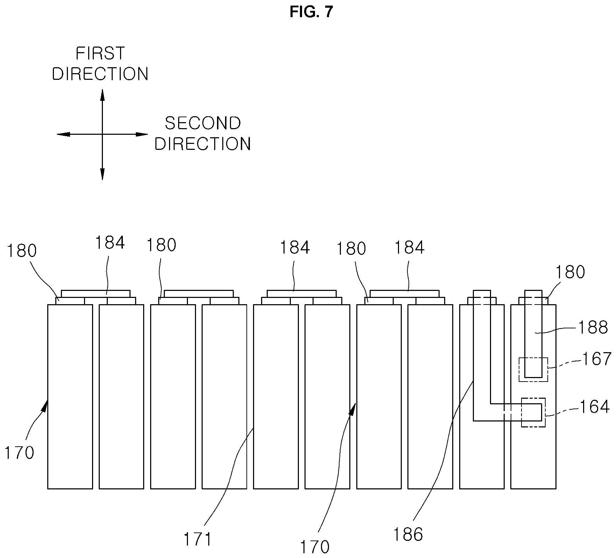

FIG. 1 is a front view of an energy storage system according to a first embodiment of the present disclosure, FIG. 2 is a perspective view illustrating a first embodiment of a first battery module included in FIG. 1, FIG. 3 is a plan view illustrating a first embodiment of a plurality of first battery cells accommodated in a first module case illustrated in FIG. 2, FIG. 4 is a front view illustrating the first embodiment of the plurality of first battery cells illustrated in FIG. 3, FIG. 5 is a perspective view illustrating a first embodiment of a second battery module included in FIG. 1, FIG. 6 is a plan view illustrating a first embodiment of a plurality of second battery cells accommodated in a second module case illustrated in FIG. 5, and FIG. 7 is a front view illustrating the first embodiment of the plurality of second battery cells illustrated in FIG. 6.

Referring to FIGS. 1 to 7, an energy storage system 10 according to the first embodiment of the present disclosure includes a battery module stack S including a plurality of first battery modules 100, a plurality of second battery modules 150, a plurality of first module bus bars 31, a plurality of second module bus bars 33, and a third module bus bar 36.

The plurality of first battery modules 100 and the plurality of second battery modules 150 are alternately arranged in a first direction. Each of the first battery modules 100 includes a first module case 101 in which a plurality of first battery cells 120 are accommodated. The first module case 101 is a substantially rectangular parallelepiped member having an inner space, and first module case 101 may include a front plate 102 on which a first negative electrode module terminal 114 and a first positive electrode module terminal 117 may be installed.

The first module bus bar 31 electrically connects a pair of first battery modules 100, which are disposed adjacent to each other with one second battery module 150 interposed therebetween, among the plurality of first battery modules 100. The first module bus bar 31 may have a stick shape extending in the first direction.

One side of the first module bus bar 31 in a longitudinal direction may be coupled to the first positive electrode module terminal 117 belonging to one of the pair of first battery modules 100 by a method such as welding. The other side of the first module bus bar 31 in the longitudinal direction may be coupled to the first negative electrode module terminal 114 belonging to the other one of the pair of first battery modules 100 by a method such as welding.

The second battery module 150 includes a second module case 151 in which a plurality of second battery cells 170 are accommodated. The second module case 151 is a substantially hexahedral-shaped member having an inner space. The second module case 151 may include a front surface 152 on which a second negative electrode module terminal 164 and a second positive electrode module terminal 167 may be installed.

The second module bus bar 33 electrically connects a pair of second battery modules 150, which are disposed adjacent to each other with one first battery module 100 interposed therebetween, among the plurality of second battery modules 150. The second module bus bar 33 may have a stick shape extending in the first direction.

One side of the second module bus bar 33 in the longitudinal direction may be coupled to the second negative electrode module terminal 164 belonging to one of the pair of second battery modules 150 by a method such as welding. The other side of the second module bus bar 33 in the longitudinal direction may be coupled to the second positive electrode module terminal 167 belonging to the other one of the pair of second battery modules 150 by a method such as welding.

The third module bus bar 36 electrically connects one of the first battery modules 100 and one of the second battery modules 150 arranged adjacent to each other. One third module bus bar 36 may be provided for the energy storage system 10.

The third module bus bar 36 may be bent in an L shape. One side of the third module bus bar 36 may be coupled to the first positive electrode module terminal 117 of the first battery module 100 by a method such as welding, and the other side of the third module bus bar 36 may be coupled to the second negative electrode module terminal 164 of the second battery module 150 by a method such as welding. However, unlike that shown in FIG. 1, one side of the third module bus bar 36 may be coupled to the first negative electrode module terminal 114 of the first battery module 100, and the other side of the third module bus bar 36 may be coupled to the second positive electrode module terminal 167 of the second battery module 150.

The energy storage system 10 may further include a battery control unit 20 configured to control the charging and discharging of the battery module stack S. The energy storage system 10 may further include a first control unit bus bar 41 configured to electrically connect the battery control unit 20 and the first battery module 100, which is closest to the battery control unit 20 among the plurality of first battery modules 100. The energy storage system 10 may also include a second control unit bus bar 43 configured to electrically connect the battery control unit 20 and the second battery module 150, which is closest to the battery control unit 20 among the plurality of second battery modules 150.

The first control unit bus bar 41 and the second control unit bus bar 43 may each have a stick shape extending in the first direction. One side of the first control unit bus bar 41 in the longitudinal direction may be coupled to a first terminal 22 of the battery control unit 20 by a method such as welding, and the other side of the first control unit bus bar 41 in the longitudinal direction may be coupled to the first negative electrode module terminal 114 of the first battery module 100, which is closest to the battery control unit 20, by a method such as welding.

One side of the second control unit bus bar 43 in the longitudinal direction may be coupled to a second terminal 24 of the battery control unit 20 by a method such as welding, and the other side of the second control unit bus bar 43 in the longitudinal direction may be coupled to the second positive electrode module terminal 167 of the second battery module 150, which is closest to the battery control unit 20, by a method such as welding.

The battery control unit 20 may be disposed outside the battery module stack S in the first direction. The third module bus bar 36 may connect the first battery module 100 farthest from the battery control unit 20 among the plurality of first battery modules 100 and the second battery module 150 farthest from the battery control unit 20 among the plurality of second battery modules 150.

The energy storage system 10 may further include a rack 11 supporting the plurality of first battery modules 100, the plurality of second battery modules 150, and the battery control unit 20. The rack 11 may include a rack frame 13, a plurality of module supports 16, and a control unit support 18. The rack frame 13 may extend in the first direction, and the rack frame 13 may be provided as four rack frames 13. The four rack frames 13 may be disposed to be spaced apart from each other.

The plurality of module supports 16 may be fixed to the rack frames 13 and may support the plurality of first battery modules 100 and the plurality of second battery modules 150. The plurality of module supports 16 may be spaced apart from each other in the first direction at regular intervals. Accordingly, a plurality of layers are formed in the rack 11 in the first direction. A layer height between a pair of module supports 16 in the first direction may be greater than the size of a width of each of the first battery modules 100 and the second battery modules 150 in the first direction.

The control unit support 18 supports the battery control unit 20. The control unit support 18 may be located higher than the module support 16 on the uppermost layer among the plurality of module supports 16. The first direction may be a vertical direction, a second direction may be a horizontal direction orthogonal to the first direction, and a third direction may be a front/rear direction orthogonal to the first direction and the second direction.

Each of the first battery modules 100 may include the plurality of first battery cells 120, a plurality of first cell bus bars 134, and a pair of first cell-module bus bars 136 and 138, which are accommodated in the first module case 101.

Each of the first battery cells 120 may include a first cell case 121, a pair of first cell terminals 130, and an electrode assembly (not shown). The electrode assembly may be accommodated in the first cell case 121. The electrode assembly may be formed by winding or stacking a stack of a first electrode plate, a separator, and a second electrode plate, which may be formed as thin plates or films.

When the electrode assembly is a wound-type electrode assembly, a winding axis may be parallel to a longitudinal direction of the case. In addition, the electrode assembly may be a stack type electrode assembly rather than the winding type electrode assembly, and the shape of the electrode assembly is not limited in the present disclosure. In addition, the electrode assembly may be a Z-stack electrode assembly in which a positive electrode plate and a negative electrode plate are inserted into both sides of a separator bent in a Z shape. In addition, one or more electrode assemblies may be stacked such that long side surfaces thereof are adjacent to each other and accommodated in the case. The number of electrode assemblies is not limited in the present disclosure. In the electrode assembly, the first electrode plate may serve as a negative electrode, and the second electrode plate may serve as a positive electrode. Of course, the reverse is also possible.

The first electrode plate may be formed by applying a first electrode active material such as graphite or carbon to a first electrode current collector plate formed of a metal foil such as copper, a copper alloy, nickel, or a nickel alloy, and may include a first electrode tab (or a first uncoated portion), which is a region to which the first electrode active material is not applied. The first electrode tab may serve as a path for current flow between the first electrode plate and a first current collector. In some examples, the first electrode tab may be formed by cutting the first electrode plate such that the first electrode tab protrudes to one side portion in advance when manufacturing the first electrode plate, and the first electrode tab may protrude further to one side portion than the separator without separate cutting.

The second electrode plate may be formed by applying a second electrode active material such as a transition metal oxide to a second electrode current collector plate formed of a metal foil such as aluminum or an aluminum alloy. The second electrode tab may include a second electrode tab (or a second uncoated portion), which is a region to which the second electrode active material is not applied. The second electrode tab may serve as a path for current flow between the second electrode plate and a second current collector. In some examples, the second electrode tab may be formed by cutting the second electrode plate such that the second electrode tab protrudes to the other side portion in advance when manufacturing the second electrode plate, and the second electrode tab may protrude further to the other side portion than the separator without separate cutting.

In some examples, the first electrode tab and the second electrode tab may be located on a left-side end surface and a right-side end surface, respectively, or may also be loaded on one side surface in the same direction. Here, the left and right sides are for illustrative purposes only, and positions thereof may be changed when the first battery cell 120 rotates left and right or up and down.

The first electrode tab of the first electrode plate and the second electrode tab of the second electrode plate are located at both side end portions of the electrode assembly described above. In some examples, the electrode assembly may be accommodated in the case with an electrolyte. In addition, the first current collector and the second current collector are located by being respectively welded and connected to the first electrode tab of the first electrode plate and the second electrode tab of the second electrode plate exposed to both sides of the electrode assembly.

The first cell case 121 may have a substantially rectangular parallelepiped shape, in which the electrode assembly and an electrolyte may be accommodated. The first cell case 121 may include a metal can with one side open, and a cap plate closing the open one side of the metal can. The pair of first cell terminals 130 may be installed on the cap plate to protrude outward from the cap plate.

One of the pair of first cell terminals 130 may be electrically connected to one of the first current collector and the second current collector, and the other one of the pair of first cell terminals 130 may be electrically connected to the other one of the first current collector and the second current collector. Accordingly, the one of the pair of first cell terminals 130 may become a positive electrode terminal, and the other one of the pair of first cell terminals 130 may become a negative electrode terminal.

The pair of first cell terminals 130 may be located at both side end portions of the cap plate in the longitudinal direction. The first battery cell 120 may be a prismatic-type battery cell. Hereinafter, one side surface of the first cell case 121 having the pair of first cell terminals 130 protruding outward will be referred to as a cell terminal side surface.

The plurality of first battery cells 120 may be disposed inside the first module case 101 such that the pair of first cell terminals 130 protrude upward in the first direction. The pair of first cell terminals 130 of each of the first battery cells 120 may be arranged in the third direction, i.e., in the front/rear direction.

The plurality of first battery cells 120 may be arranged in a single layer in the first direction, i.e., in the vertical direction, arranged to form even-numbered columns in the second direction, i.e., in the horizontal direction, and arranged to form even-numbered rows in the third direction, i.e., in the front/rear direction.

The first module case 101 may be formed in a substantially rectangular parallelepiped shape. The first module case 101 may include a lower plate 112, an upper plate 110, the front plate 102, a rear plate (not shown), and a pair of side plates 105. The upper plate 110 may be disposed above the lower plate 112 in the first direction. The lower plate 112 may be in contact with and supported by the module support 16. The rear plate may be disposed on the rear side of the front plate 102 in the third direction, and the pair of side plates 105 may be disposed to be spaced apart from each other in the second direction.

The plurality of first cell bus bars 134 may electrically connect the plurality of first battery cells 120. Each of the first cell bus bars 134 may connect one first cell terminal 130 of one first battery cell 120 and one first cell terminal 130 of another first battery cell 120 adjacent to the one first battery cell 120 inside the first module case 101.

The first cell-module bus bar 136 or 138 may electrically connect one of the plurality of first battery cells 120 and one of the first positive electrode module terminal 117 and the first negative electrode module terminal 114. The first cell-module bus bars 136 and 138 may be provided in a pair. One of the pair of first cell-module bus bars 136 and 138 may be a first type first cell-module bus bar 136 configured to electrically connect the first negative electrode module terminal 114 of the first battery module 100 and one of the pair of first cell terminals 130 of one of the plurality of first battery cells 120.

The first type first cell-module bus bar 136 may be a stick-shaped member extending to a predetermined width and thickness and bent at least once. One side of the first type first cell-module bus bar 136 in the longitudinal direction may be coupled to the first cell terminal 130 by a method such as welding.

The first negative electrode module terminal 114 and the first positive electrode module terminal 117 may be installed on the front plate 102 to pass through the front plate 102 in a thickness direction, i.e., in the third direction. An outer side surface of the first negative electrode module terminal 114 may protrude to the front side to be exposed to outside of the first module case 101, and an inner side surface of the first negative electrode module terminal 114 may protrude to the rear side in the first module case 101 so as not to be exposed.

An end portion of the first module bus bar 31 or the first control unit bus bar 41 may be coupled to the outer side surface of the first negative electrode module terminal 114. A side of the first type first cell-module bus bar 136 in the longitudinal direction may be coupled to the inner side surface of the first negative electrode module terminal 114 by a method such as welding.

The other one of the pair of first cell-module bus bars 136 and 138 may be a second type first cell-module bus bar 138 configured to electrically connect the first positive electrode module terminal 117 of the first battery module 100 and one of the pair of first cell terminals 130 of one of the plurality of first battery cells 120.

The second type first cell-module bus bar 138 may be a stick-shaped member extending to a predetermined width and thickness and bent at least once. One side of the second type first cell-module bus bar 138 in the longitudinal direction may be coupled to the first cell terminal 130 by a method such as welding.

An outer side surface of the first positive electrode module terminal 117 may protrude to the front side to be exposed to outside of the first module case 101, and an inner side surface of the first positive electrode module terminal 117 may protrude to the rear side in the first module case 101 so as not to be exposed.

An end portion of the first module bus bar 31 or the third module bus bar 36 may be coupled to the outer side surface of the first positive electrode module terminal 117. A side of the second type first cell-module bus bar 138 in the longitudinal direction may be coupled to the inner side surface of the first positive electrode module terminal 117 by a method such as welding.

Each of the second battery modules 150 may include the plurality of second battery cells 170, a plurality of second cell bus bars 184, and a pair of second cell-module bus bars 186 and 188, which are accommodated in the second module case 151.

Each of the second battery cells 170 may include a second cell case 171, a pair of second cell terminals 180, and an electrode assembly (not shown). The second cell case 171, the pair of second cell terminals 180, and the electrode assembly have the same configuration as the first cell case 121, the pair of first cell terminals 130, and the electrode assembly included in the first battery cell 120. As the first cell case 121, the pair of first cell terminals 130, and the electrode assembly (not shown) have been described above, repeated descriptions will be omitted.

The plurality of second battery cells 170 may be disposed inside the second module case 151 such that the pair of second cell terminals 180 protrude upward in the first direction. The pair of second cell terminals 180 of each of the second battery cells 170 may be arranged in the third direction, i.e., in the front/rear direction.

The plurality of second battery cells 170 may be arranged in a single layer in the first direction, i.e., in the vertical direction, arranged to form even-numbered columns in the second direction, i.e., in the horizontal direction, and arranged to form even-numbered rows in the third direction, i.e., in the front/rear direction.

The second module case 151 may be formed in a substantially rectangular parallelepiped shape. The second module case 151 may include a lower plate 162, an upper plate 160, a front plate 152, a rear plate (not shown), and a pair of side plates 155. The upper plate 160 may be disposed above the lower plate 162 in the first direction. The lower plate 162 may be in contact with and supported by the module support 16. The rear plate may be disposed on the rear side of the front plate 152 in the third direction, and the pair of side plates 155 may be spaced apart from each other in the second direction.

The plurality of second cell bus bars 184 may electrically connect the plurality of second battery cells 170. Each of the second cell bus bars 184 may connect one second cell terminal 180 of one second battery cell 170 and one second cell terminal 180 of another second battery cell 170 adjacent to the one second battery cell 170 inside the second module case 151.

The second cell-module bus bar 186 or 188 may electrically connect one of the plurality of second battery cells 170 and one of the second positive electrode module terminal 167 and the second negative electrode module terminal 164.

The second cell-module bus bars 186 and 188 may be provided in a pair. One of the pair of second cell-module bus bars 186 and 188 may be a first type second cell-module bus bar 186 configured to electrically connect the second negative electrode module terminal 164 of the second battery module 150 and one of the pair of second cell terminals 180 of one of the plurality of second battery cells 170.

The first type second cell-module bus bar 186 may be a stick-shaped member extending to a predetermined width and thickness and bent at least once. One side of the first type second cell-module bus bar 186 in the longitudinal direction may be coupled to the second cell terminal 180 by a method such as welding.

The second negative electrode module terminal 164 and the second positive electrode module terminal 167 may be installed on the front plate 152 to pass through the front plate 152 in the thickness direction, i.e., in the third direction. An outer side surface of the second negative electrode module terminal 164 may protrude to the front side to be exposed to outside of the second module case 151, and an inner side surface of the second negative electrode module terminal 164 may protrude to the rear side in the second module case 151 so as not to be exposed.

An end portion of the second module bus bar 33 or the third module bus bar 36 may be coupled to the outer side surface of the second negative electrode module terminal 164. A side of the first type second cell-module bus bar 186 in the longitudinal direction may be coupled to the inner side surface of the second negative electrode module terminal 164 by a method such as welding.

The other one of the pair of second cell-module bus bars 186 and 188 may be a second type second cell-module bus bar 188 configured to electrically connect the second positive electrode module terminal 167 of the second battery module 150 and one of the pair of second cell terminals 180 of one of the plurality of second battery cells 170.

The second type second cell-module bus bar 188 may be a stick-shaped member extending to a predetermined width and thickness and bent at least once. One side of the second type second cell-module bus bar 188 in the longitudinal direction may be coupled to the second cell terminal 180 by a method such as welding.

An outer side surface of the second positive electrode module terminal 167 may protrude to the front side to be exposed to outside of the second module case 151, and an inner side surface of the second positive electrode module terminal 167 may protrude to the rear side in the second module case 151 so as not to be exposed.

An end portion of the second module bus bar 33 or the second control unit bus bar 43 may be coupled to the outer side surface of the second positive electrode module terminal 167. A side of the second type second cell-module bus bar 188 in the longitudinal direction may be coupled to the inner side surface of the second positive electrode module terminal 167 by a method such as welding.

Although not shown in the drawings, a module vent (not shown) may be provided in the first battery modules 100 or the second battery modules 150. The vent may discharge high-temperature gas and/or flames to outside the modules when the high-temperature gas or flames are generated inside the first battery modules 100 or the second battery modules 150. The module vent may be formed in the upper plate 110 or 160.

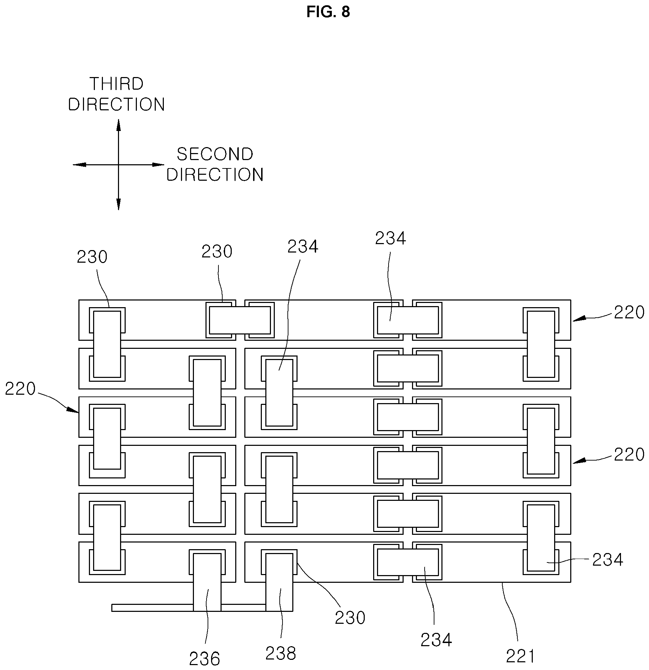

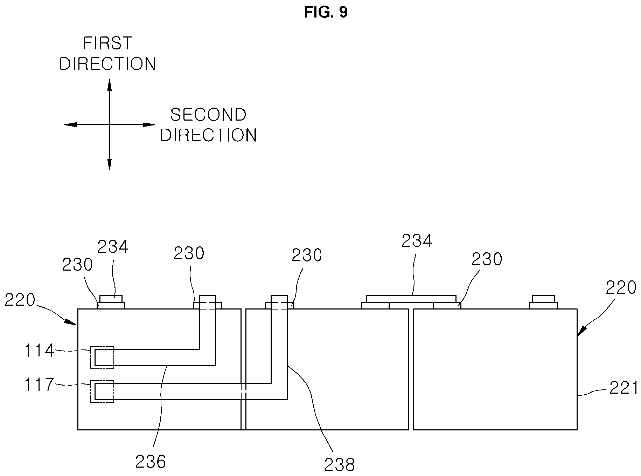

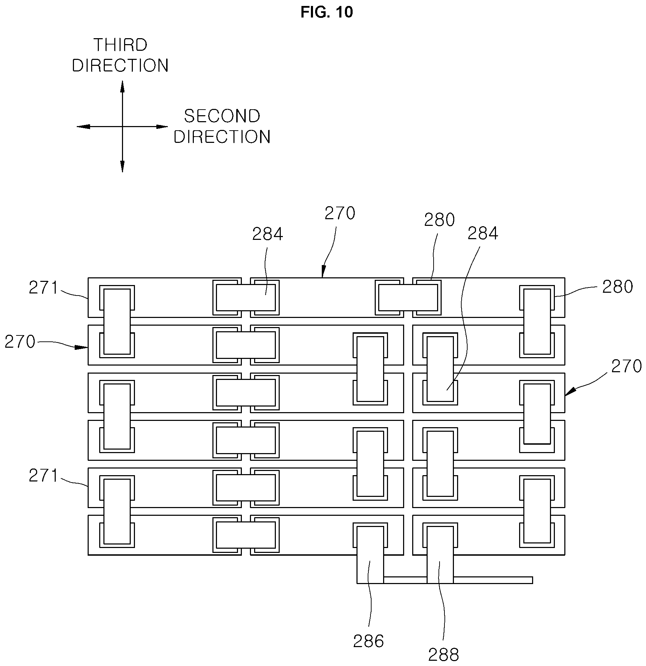

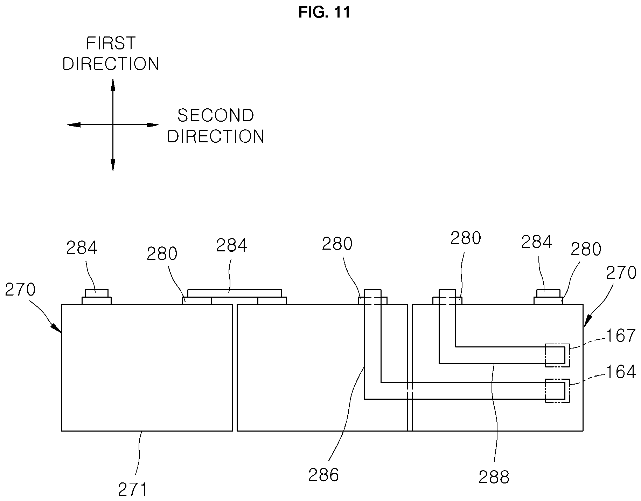

FIG. 8 is a plan view illustrating a second embodiment of the plurality of first battery cells accommodated in the first module case illustrated in FIG. 2, FIG. 9 is a front view illustrating the second embodiment of the plurality of first battery cells illustrated in FIG. 8, FIG. 10 is a plan view illustrating a second embodiment of the plurality of second battery cells accommodated in the second module case illustrated in FIG. 2, and FIG. 11 is a front view illustrating the second embodiment of the plurality of second battery cells illustrated in FIG. 10.

Referring to FIGS. 2, 8, and 9, a plurality of first battery cells 220, a plurality of first cell bus bars 234, and a pair of first cell-module bus bars 236 and 238 illustrated in FIGS. 8 and 9 may be accommodated in the first module case 101 in place of the plurality of first battery cells 120, the plurality of first cell bus bars 134, and the pair of first cell-module bus bars 136 and 138 illustrated in the first embodiment depicted in FIGS. 3 and 4.

Each of the first battery cells 220 may include a first cell case 221, a pair of first cell terminals 230, and an electrode assembly (not shown). The first cell case 221, the pair of first cell terminals 230, and the electrode assembly have a similar configuration as the first cell case 121, the pair of first cell terminals 130, and the electrode assembly included in the first battery cell 120 according to the first embodiment described with reference to FIGS. 3 and 4. As the first cell case 121, the pair of first cell terminals 130, and the electrode assembly (not shown) have been described above, repeated descriptions will be omitted.

According to the embodiment illustrated with reference to FIGS. 8 and 9, the plurality of first battery cells 220 may be disposed inside the first module case 101 such that the pair of first cell terminals 230 protrude upward in the first direction. The pair of first cell terminals 230 of each of the first battery cells 220 may be arranged in the second direction, i.e., in the horizontal direction.

The plurality of first battery cells 220 may be arranged in a single layer in the first direction, i.e., in the vertical direction, arranged to form odd-numbered columns in the second direction, i.e., in the horizontal direction, and arranged to form even-numbered rows in the third direction, i.e., in the front/rear direction.

The plurality of first cell bus bars 234 may electrically connect the plurality of first battery cells 220. Each of the first cell bus bars 234 may connect one first cell terminal 230 of one first battery cell 220 and one first cell terminal 230 of another first battery cell 220 adjacent to the one first battery cell 220 inside the first module case 101.

The first cell-module bus bar 236 or 238 may electrically connect one of the plurality of first battery cells 220 and one of the first positive electrode module terminal 117 and the first negative electrode module terminal 114. For example, the first cell-module bus bars 236 and 238 may be provided in a pair. One of the pair of first cell-module bus bars 236 and 238 may be a first type first cell-module bus bar 236 configured to electrically connect the first negative electrode module terminal 114 of the first battery module 100 and one of the pair of first cell terminals 230 of one of the plurality of first battery cells 220.

The first type first cell-module bus bar 236 may be a stick-shaped member extending to a predetermined width and thickness and bent at least once. One side of the first type first cell-module bus bar 236 in the longitudinal direction may be coupled to the first cell terminal 230 by a method such as welding.

The end portion of the first module bus bar 31 or the first control unit bus bar 41 may be coupled to the outer side surface of the first negative electrode module terminal 114. A side of the first type first cell-module bus bar 236 in the longitudinal direction may be coupled to the inner side surface of the first negative electrode module terminal 114 by a method such as welding.

The other one of the pair of first cell-module bus bars 236 and 238 may be a second type first cell-module bus bar 238 configured to electrically connect the first positive electrode module terminal 117 of the first battery module 100 and one of the pair of first cell terminals 230 of one of the plurality of first battery cells 220.

The second type first cell-module bus bar 238 may be a stick-shaped member extending to a predetermined width and thickness and bent at least once. One side of the second type first cell-module bus bar 238 in the longitudinal direction may be coupled to the first cell terminal 230 by a method such as welding.

The end portion of the first module bus bar 31 or the third module bus bar 36 may be coupled to the outer side surface of the first positive electrode module terminal 117. A side of the second type first cell-module bus bar 238 in the longitudinal direction may be coupled to the inner side surface of the first positive electrode module terminal 117 by a method such as welding.

Referring to FIGS. 5, 10, and 11, a plurality of second battery cells 270, a plurality of second cell bus bars 284, and a pair of second cell-module bus bars 286 and 288 illustrated in FIGS. 10 and 11 may be accommodated in the second module case 151 in place of the plurality of second battery cells 170, the plurality of second cell bus bars 184, and the pair of second cell-module bus bars 186 and 188 illustrated in FIGS. 6 and 7.

Each of the second battery cells 270 may include a second cell case 271, a pair of second cell terminals 280, and an electrode assembly (not shown). The second cell case 271, the pair of second cell terminals 280, and the electrode assembly have a similar configuration as the first cell case 121, the pair of first cell terminals 130, and the electrode assembly included in the first battery cell 120 according to the first embodiment described with reference to FIGS. 3 and 4. As the first cell case 121, the pair of first cell terminals 130, and the electrode assembly (not shown) have been described above, repeated descriptions will be omitted.

According to the embodiment illustrated with reference to FIGS. 10 and 11, the plurality of second battery cells 270 may be disposed inside the second module case 151 such that the pair of second cell terminals 280 protrude upward in the first direction. The pair of second cell terminals 280 of each of the second battery cells 270 may be arranged in the second direction, i.e., in the horizontal direction.

The plurality of second battery cells 270 may be arranged in a single layer in the first direction, i.e., in the vertical direction, arranged to form odd-numbered columns in the second direction, i.e., in the horizontal direction, and arranged to form even-numbered rows in the third direction, i.e., in the front/rear direction.

The plurality of second cell bus bars 284 may electrically connect the plurality of second battery cells 270. Each of the second cell bus bars 284 may connect one second cell terminal 280 of one second battery cell 270 and one second cell terminal 280 of another second battery cell 270 that is adjacent to the one second battery cell 270 inside the second module case 151.

The second cell-module bus bar 286 or 288 may electrically connect one of the plurality of second battery cells 270 and one of the second positive electrode module terminal 167 and the second negative electrode module terminal 164. For example, the second cell-module bus bars 286 and 288 may be provided in a pair. One of the pair of second cell-module bus bars 286 and 288 may be a first type second cell-module bus bar 286 configured to electrically connect the second negative electrode module terminal 164 of the second battery module 150 and one of the pair of second cell terminals 280 of one of the plurality of second battery cells 270.

The first type second cell-module bus bar 286 may be a stick-shaped member extending to a predetermined width and thickness and bent at least once. One side of the first type second cell-module bus bar 286 in the longitudinal direction may be coupled to the second cell terminal 280 by a method such as welding.

The end portion of the second module bus bar 33 or the third module bus bar 36 may be coupled to the outer side surface of the second negative electrode module terminal 164. A side of the first type second cell-module bus bar 286 in the longitudinal direction may be coupled to the inner side surface of the second negative electrode module terminal 164 by a method such as welding.

The other one of the pair of second cell-module bus bars 286 and 288 may be a second type second cell-module bus bar 288 configured to electrically connect the second positive electrode module terminal 167 of the second battery module 150 and one of the pair of second cell terminals 280 of one of the plurality of second battery cells 270.

The second type second cell-module bus bar 288 may be a stick-shaped member extending to a predetermined width and thickness and bent at least once. One side of the second type second cell-module bus bar 288 in the longitudinal direction may be coupled to the second cell terminal 280 by a method such as welding.

The end portion of the second module bus bar 33 or the second control unit bus bar 43 may be coupled to the outer side surface of the second positive electrode module terminal 167. A side of the second type second cell-module bus bar 288 in the longitudinal direction may be coupled to the inner side surface of the second positive electrode module terminal 167 by a method such as welding.

Referring again to FIGS. 1, 2, and 5, the first positive electrode module terminal 117 and the first negative electrode module terminal 114 of the first battery module 100 may be disposed on one side of the first battery module 100 in the second direction crossing the first direction. The second positive electrode module terminal 167 and the second negative electrode module terminal 164 of the second battery module 150 may be disposed on the other side of the second battery module 150 in the second direction.

The first positive electrode module terminal 117 and the first negative electrode module terminal 114 may be disposed on the left side of the front plate 102 of the first module case 101, and the second positive electrode module terminal 167 and the second negative electrode module terminal 164 may be disposed on the right side of the front plate 152 of the second module case 151.

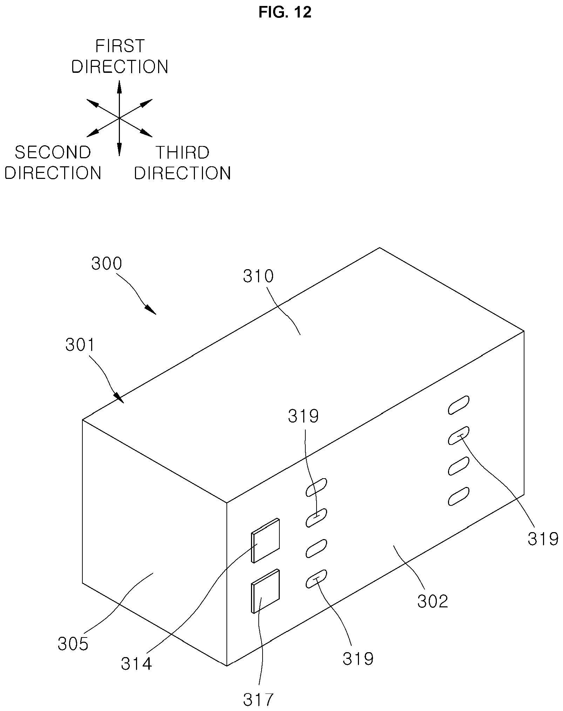

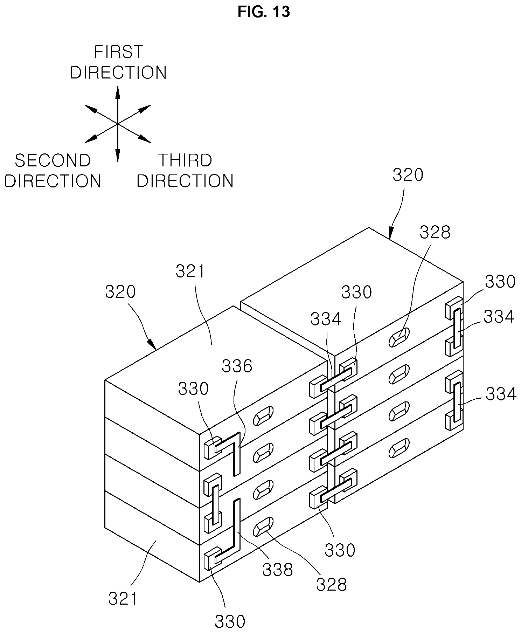

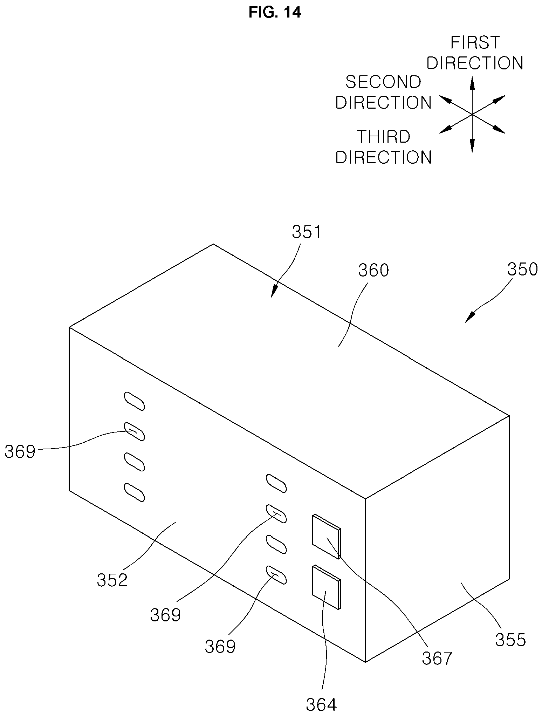

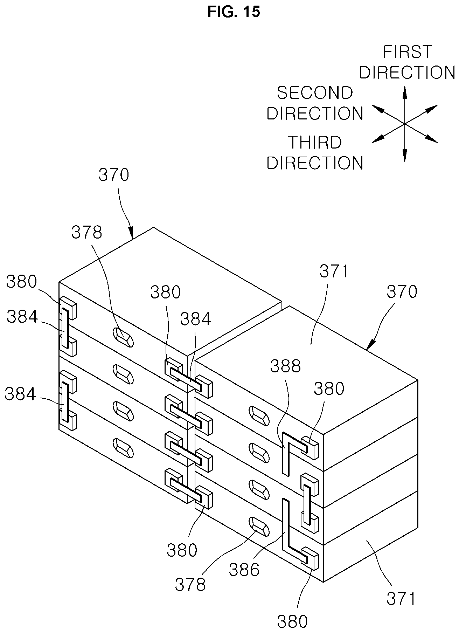

FIG. 12 is a perspective view illustrating a second embodiment of the first battery module included in FIG. 1, FIG. 13 is a perspective view illustrating one embodiment of a plurality of first battery cells accommodated in a first module case illustrated in FIG. 12, FIG. 14 is a perspective view illustrating a second embodiment of the second battery module included in FIG. 1, and FIG. 15 is a perspective view illustrating one embodiment of a plurality of second battery cells accommodated in a second module case illustrated in FIG. 14.

Referring to FIG. 1 and FIGS. 12 to 15, a plurality of first battery modules 300 and a plurality of second battery modules 350 according to the second embodiment may be supported by the rack 11 of FIG. 1 in place of the plurality of first battery modules 100 and the plurality of second battery modules 150 according to the first embodiment,

Each of the first battery modules 300 includes a first module case 301 in which a plurality of first battery cells 320 are accommodated. The first module case 301 is a substantially rectangular parallelepiped member having an inner space, and the first module case 301 may include a front plate 302 on which a first negative electrode module terminal 314 and a first positive electrode module terminal 317 may be installed.

The first module bus bar 31 electrically connects a pair of first battery modules 300, which are disposed adjacent to each other with one second battery module 350 interposed therebetween, among the plurality of first battery modules 300. As discussed above, the first module bus bar 31 may have a stick shape extending in the first direction.

One side of the first module bus bar 31 in the longitudinal direction may be coupled to the first positive electrode module terminal 317 belonging to one of the pair of first battery modules 300. The other side of the first module bus bar 31 in the longitudinal direction may be coupled to the first negative electrode module terminal 314 belonging to the other one of the pair of first battery modules 300.

The second battery module 350 includes a second module case 351 in which a plurality of second battery cells 370 are accommodated. The second module case 351 is a substantially hexahedral-shaped member having an inner space. The second module case 351 may include a front surface 352 on which a second negative electrode module terminal 364 and a second positive electrode module terminal 367 may be installed.

The second module bus bar 33 electrically connects a pair of second battery modules 350, which are disposed adjacent to each other with one first battery module 300 interposed therebetween, among the plurality of second battery modules 350. The second module bus bar 33 may have a stick shape extending in the first direction.

One side of the second module bus bar 33 in the longitudinal direction may be coupled to the second negative electrode module terminal 364 belonging to one of the pair of second battery modules 350,. The other side of the second module bus bar 33 in the longitudinal direction may be coupled to the second positive electrode module terminal 367 belonging to the other one of the pair of second battery modules 350.

The third module bus bar 36 electrically connects one of the first battery modules 300 and one of the second battery modules 350 that arranged adjacent to each other. One side of the third module bus bar 36 may be coupled to the first positive electrode module terminal 317 of the first battery module 300, and the other side of the third module bus bar 36 may be coupled to the second negative electrode module terminal 364 of the second battery module 350. However, unlike the configuration shown in FIG. 1, one side of the third module bus bar 36 may be coupled to the first negative electrode module terminal 314 of the first battery module 300, and the other side of the third module bus bar 36 may be coupled to the second positive electrode module terminal 367 of the second battery module 350.

The first control unit bus bar 41 electrically connects the battery control unit 20 and the first battery module 300 closest to the battery control unit 20 among the plurality of first battery modules 300. The second control unit bus bar 43 electrically connects the battery control unit 20 and the second battery module 350 closest to the battery control unit 20 among the plurality of second battery modules 350.

One side of the first control unit bus bar 41 in the longitudinal direction may be coupled to the first terminal 22 of the battery control unit 20. The other side of the first control unit bus bar 41 in the longitudinal direction may be coupled to the first negative electrode module terminal 314 of the first battery module 300 closest to the battery control unit 20. One side of the second control unit bus bar 43 in the longitudinal direction may be coupled to the second terminal 24 of the battery control unit 20. The other side of the second control unit bus bar 43 in the longitudinal direction may be coupled to the second positive electrode module terminal 367 of the second battery module 350 closest to the battery control unit 20.

The battery control unit 20 may be disposed outside the battery module stack S in the first direction. The third module bus bar 36 may connect the first battery module 300 farthest from the battery control unit 20 among the plurality of first battery modules 300 and the second battery module 350 farthest from the battery control unit 20 among the plurality of second battery modules 350.

Each of the first battery modules 300 may include the plurality of first battery cells 320, a plurality of first cell bus bars 334, and a pair of first cell-module bus bars 336 and 338, which are accommodated in the first module case 301.

Each of the first battery cells 320 may include a first cell case 321, a pair of first cell terminals 330, and an electrode assembly (not shown). The first cell case 321, the pair of first cell terminals 330, and the electrode assembly have a similar configuration as the first cell case 121, the pair of first cell terminals 130, and the electrode assembly included in the first battery cell 120 according to the first embodiment described above with reference to FIGS. 3 and 4. As the first cell case 121, the pair of first cell terminals 130, and the electrode assembly have been described above, repeated descriptions will be omitted.

Each of the first battery cells 320 may further include a first cell vent 328. The first cell vent 328 may be installed in a side surface of the first cell case between the pair of first cell terminals 330. The first cell vent 328 ruptures when high-temperature gas and flames are generated inside the first cell case 321 due to overcharge or abnormal operation Emissions such as the gas and flames from inside of the first cell case 321 may be discharged to outside of the battery cells 320 through the first cell vents 328.

According to the embodiment illustrated with reference to FIGS. 12 and 13, the plurality of first battery cells 320 may be disposed inside the first module case 301 such that the pair of first cell terminals 330 protrude to the front side in the third direction. The pair of first cell terminals 330 of each of the first battery cells 320 may be arranged in the second direction, i.e., in the horizontal direction.

The plurality of first battery cells 320 may be arranged in an even number of layers in the first direction, i.e., in the vertical direction, arranged in the second direction, i.e., in the horizontal direction to form a plurality of columns, and arranged in the third direction, i.e., in the front/rear direction to form a single row.

The first module case 301 may be formed in a substantially rectangular parallelepiped shape. The first module case 301 may include a lower plate 312, an upper plate 310, the front plate 302, a rear plate (not shown), and a pair of side plates 305. The upper plate 310 may be disposed above the lower plate 312 in the first direction. The lower plate 312 may be in contact with and supported by the module support 16. The rear plate may be disposed on the rear side of the front plate 302 in the third direction, and the pair of side plates 305 may be spaced apart from each other in the second direction.

The plurality of first cell bus bars 334 may electrically connect the plurality of first battery cells 320. Each of the first cell bus bars 334 may connect one first cell terminal 330 of one of the first battery cells 320 and one first cell terminal 330 of another of the first battery cells 320 adjacent to the one first battery cell 320 inside the first module case 301.

The first cell-module bus bar 336 or 338 may electrically connect one of the plurality of first battery cells 320 and one of the first positive electrode module terminal 317 and the first negative electrode module terminal 314.

The first cell-module bus bars 336 and 338 may be provided in a pair. One of the pair of first cell-module bus bars 336 and 338 may be a first type first cell-module bus bar 336 configured to electrically connect the first negative electrode module terminal 314 of the first battery module 300 and one of the pair of first cell terminals 330 of one of the plurality of first battery cells 320. The first type first cell-module bus bar 336 may be a stick-shaped member extending a predetermined width and thickness and bent at least once. One side of the first type first cell-module bus bar 336 in the longitudinal direction may be coupled to the first cell terminal 330 by a method such as welding.

The first negative electrode module terminal 314 and the first positive electrode module terminal 317 may be installed on the front plate 302 and pass through the front plate 302 in the thickness direction, i.e., in the third direction. An outer side surface of the first negative electrode module terminal 314 may protrude to the front side and be exposed to outside of the first module case 301. An inner side surface of the first negative electrode module terminal 314 may protrude to the rear side in the first module case 301 so as not to be exposed.

The end portion of the first module bus bar 31 or the first control unit bus bar 41 may be coupled to the outer side surface of the first negative electrode module terminal 314. A side of the first type first cell-module bus bar 336 in the longitudinal direction may be coupled to the inner side surface of the first negative electrode module terminal 314 by a method such as welding.

The other one of the pair of first cell-module bus bars 336 and 338 may be a second type first cell-module bus bar 338 configured to electrically connect the first positive electrode module terminal 317 of the first battery module 300 and one of the pair of first cell terminals 330 of one of the plurality of first battery cells 320.

The second type first cell-module bus bar 338 may be a stick-shaped member extending a predetermined width and thickness and bent at least once. One side of the second type first cell-module bus bar 338 in the longitudinal direction may be coupled to the first cell terminal 330 by a method such as welding.

An outer side surface of the first positive electrode module terminal 317 may protrude to the front side and be exposed to outside of the first module case 301. An inner side surface of the first positive electrode module terminal 317 may protrude to the rear side in the first module case 301 so as not to be exposed.

The end portion of the first module bus bar 31 or the third module bus bar 36 may be coupled to the outer side surface of the first positive electrode module terminal 317. A side of the second type first cell-module bus bar 338 in the longitudinal direction may be coupled to the inner side surface of the first positive electrode module terminal 317 by a method such as welding.

The first module case 301 may include a first module vent 319 that opens in the second direction or in the third direction. A plurality of first module vents 319 each facing one of the first cell vents 328 of the first battery cells 320 are formed in the first module case 301. The number of first module vents 319 may correspond one-to-one to the number of first cell vents 328. The plurality of first module vents 319 may be formed in the front plate 302 of the first module case 301. The first module vents 319 may be through holes passing through the front plate 302 in the thickness direction.

When an abnormal phenomenon such as overheating and ignition occurs in one of the plurality of battery cells 320 inside the first module case 301, high-temperature emissions such as high-temperature gas and flames are discharged from the first cell vent 328 of the corresponding battery cell 320. The high-temperature emissions discharged from the first cell vent 328 may be discharged to outside of the first module case 301 through the first module vent 319 facing the first cell vent 328 without diffusing in the inside of the first module case 301.

Each of the second battery modules 350 may include the plurality of second battery cells 370, a plurality of second cell bus bars 384, and a pair of second cell-module bus bars 386 and 388, which are accommodated in the second module case 351.

Each of the second battery cells 370 may include a second cell case 371, a pair of second cell terminals 380, and an electrode assembly (not shown). The second cell case 371, the pair of second cell terminals 380, and the electrode assembly have a similar configuration as the first cell case 121, the pair of first cell terminals 130, and the electrode assembly included in the first battery cell 120 according to the first embodiment described with reference to FIGS. 3 and 4. As the first cell case 121, the pair of first cell terminals 130, and the electrode assembly have already been described, repeated descriptions will be omitted.

Each of the second battery cells 370 may include a second cell vent 378. The second cell vent 378 may be installed in a side surface of the second cell case between the pair of second cell terminals 380. The second cell vent 378 ruptures when high-temperature gas and flames are generated inside the second cell case 371 due to overcharge or abnormal operation. Emissions such as the gas and flames may be discharged the inside of the second cell case 371 to outside of the second cell case 371.

According to the embodiment illustrated with reference to FIGS. 14 and 15, the plurality of second battery cells 370 may be disposed inside the second module case 351 such that the pair of second cell terminals 380 protrude to the front side in the third direction. The pair of second cell terminals 380 of each of the second battery cells 370 may be arranged in the second direction, i.e., in the horizontal direction.

The plurality of second battery cells 370 may be arranged in an even number of layers in the first direction, i.e., in the vertical direction, arranged in the second direction, i.e., in the horizontal direction to form a plurality of columns, and arranged in the third direction, i.e., in the front/rear direction to form a single row.

The second module case 351 may be formed in a substantially rectangular parallelepiped shape. The second module case 351 may include a lower plate 362, an upper plate 360, a front plate 352, a rear plate (not shown), and a pair of side plates 355. The upper plate 360 may be disposed above the lower plate 362 in the first direction. The lower plate 362 may be in contact with and supported by the module support 16. The rear plate may be disposed on the rear side of the front plate 352 in the third direction, and the pair of side plates 355 may be spaced apart from each other in the second direction.

The plurality of second cell bus bars 384 may electrically connect the plurality of second battery cells 370. Each of the second cell bus bars 384 may connect one second cell terminal 380 of one second battery cell 370 and one second cell terminal 380 of another second battery cell 370 that is adjacent to the one second battery cell 370 inside the second module case 351.

The second cell-module bus bar 386 or 388 may electrically connect one of the plurality of second battery cells 370 and one of the second positive electrode module terminal 367 and the second negative electrode module terminal 364. The second cell-module bus bars 386 and 388 may be provided in a pair. One of the pair of second cell-module bus bars 386 and 388 may be a first type second cell-module bus bar 386 configured to electrically connect the second negative electrode module terminal 364 of the second battery module 350 and one of the pair of second cell terminals 380 of one of the plurality of second battery cells 370. The first type second cell-module bus bar 386 may be a stick-shaped member extending a predetermined width and thickness and bent at least once. One side of the first type second cell-module bus bar 386 in the longitudinal direction may be coupled to the second cell terminal 380 by a method such as welding.

The second negative electrode module terminal 364 and the second positive electrode module terminal 367 may be installed on the front plate 352 and pass through the front plate 352 in the thickness direction, i.e., in the third direction. An outer side surface of the second negative electrode module terminal 364 may protrude to the front side and exposed to outside of the second module case 351. An inner side surface of the second negative electrode module terminal 364 may protrude to the rear side in the second module case 351 so as not to be exposed.

The end portion of the second module bus bar 33 or the third module bus bar 36 may be coupled to the outer side surface of the second negative electrode module terminal 364. A side of the first type second cell-module bus bar 386 in the longitudinal direction may be coupled to the inner side surface of the second negative electrode module terminal 364 by a method such as welding.

The other one of the pair of second cell-module bus bars 386 and 388 may be a second type second cell-module bus bar 388 configured to electrically connect the second positive electrode module terminal 367 of the second battery module 350 and one of the pair of second cell terminals 380 of one of the plurality of second battery cells 370. The second type second cell-module bus bar 388 may be a stick-shaped member extending a predetermined width and thickness and bent at least once. One side of the second type second cell-module bus bar 388 in the longitudinal direction may be coupled to the second cell terminal 380 by a method such as welding.

An outer side surface of the second positive electrode module terminal 367 may protrude to the front side and exposed to the outside of the second module case 351. An inner side surface of the second positive electrode module terminal 367 may protrude to the rear side in the second module case 351 so as not to be exposed.

The end portion of the second module bus bar 33 or the second control unit bus bar 43 may be coupled to the outer side surface of the second positive electrode module terminal 367. A side of the second type second cell-module bus bar 388 in the longitudinal direction may be coupled to the inner side surface of the second positive electrode module terminal 367 by a method such as welding.

The second module case 351 may include a second module vent 369 that opens in the second direction or in the third direction. A plurality of second module vents 369 each facing one of the second cell vents 378 of the second battery cells 370 are formed in the second module case 351. The number of second module vents 369 may correspond one-to-one to the number of second cell vents 378. The plurality of second module vents 369 may be formed in the front plate 352 of the second module case 351. The second module vents 369 may be through holes passing through the front plate 352 in the thickness direction.

When an abnormal phenomenon such as overheating and ignition occurs in one of the plurality of battery cells 370 inside the second module case 351, high-temperature emissions such as high-temperature gas and flames are discharged from the second cell vent 378 of the corresponding battery cell 370. The high-temperature emissions discharged from the second cell vent 378 may be discharged to outside of the second module case 351 through the second module vent 369 facing the second cell vent 378 without diffusing in the inside of the second module case 351.

Referring to FIGS. 12 and 14, the first positive electrode module terminal 317 and the first negative electrode module terminal 314 of the first battery module 300 may be disposed on one side of the first battery module 300 in the second direction crossing the first direction. The second positive electrode module terminal 367 and the second negative electrode module terminal 364 of the second battery module 350 may be disposed on the other side of the second battery module 350 in the second direction.

The first positive electrode module terminal 317 and the first negative electrode module terminal 314 may be disposed on the left side of the front plate 302 of the first module case 301,. The second positive electrode module terminal 367 and the second negative electrode module terminal 364 may be disposed on the right side of the front plate 352 of the second module case 351.

The first battery module 300, in which the first module case 301 is rotated 180° such that one side surface and the other side surface of the first module case 301 spaced apart from each other in the first direction are reversed from each other, may be the same as the second battery module 350. For example, when the first battery module 300 is rotated 180° around a rotation axis parallel to the second direction so that the upper plate 310 and the lower plate 312 are reversed to each other, the first battery module 300 may become the second battery module 350.

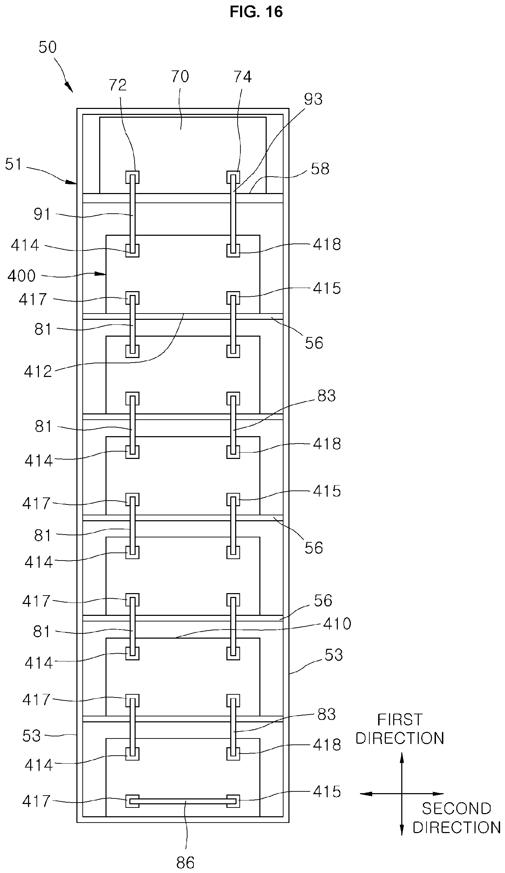

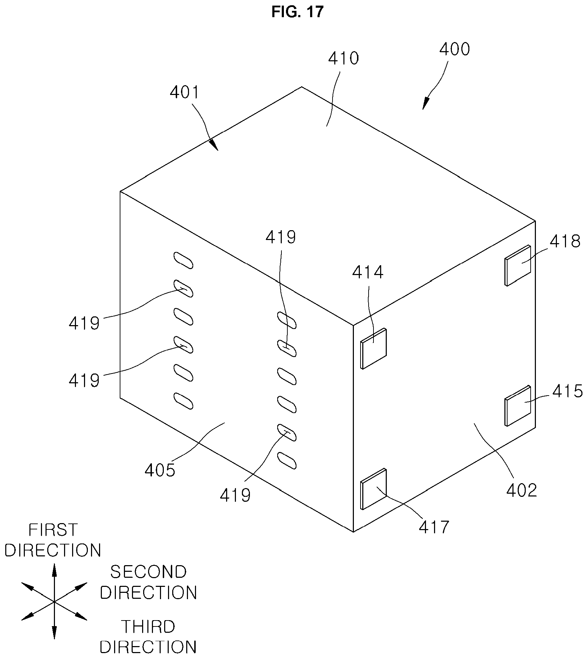

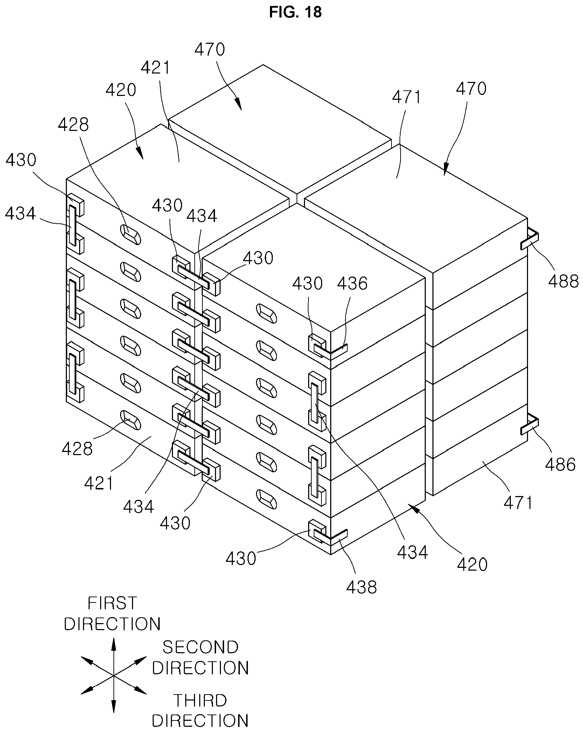

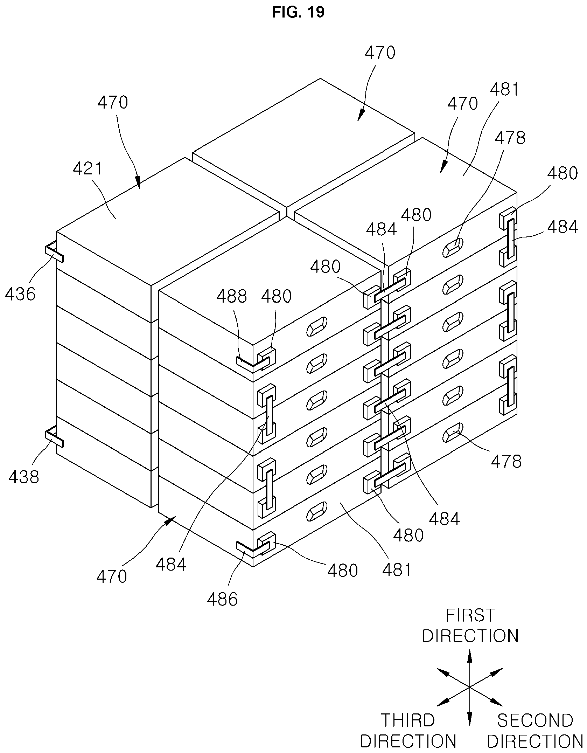

FIG. 16 is a front view illustrating an energy storage system according to a second embodiment of the present disclosure, FIG. 17 is a perspective view illustrating one embodiment of a battery module included in FIG. 16, FIG. 18 is a perspective view illustrating one example of a plurality of first battery cells and a plurality of second battery cells accommodated in a module case illustrated in FIG. 17 when viewed from one side, and FIG. 19 is a perspective view illustrating the plurality of first battery cells and the plurality of second battery cells of FIG. 18 when viewed from the opposite side to that of FIG. 18.

Referring to FIGS. 16 to 19, an energy storage system 50 according to the second embodiment of the present disclosure includes a plurality of battery modules 400, a plurality of first module bus bars 81, a plurality of second module bus bars 83, and a third module bus bar 86. The plurality of battery modules 400 are arranged in a first direction. Each of the battery modules 400 includes a module case 401 in which a plurality of first battery cells 420 and a plurality of second battery cells 470 are accommodated. The module case 401 is a substantially rectangular parallelepiped member having an inner space. The module case 401 may include a front plate 402 on which first module terminals 414 and 417 and second module terminals 415 and 418 are provided. The first module terminals 414 and 417 may include a first negative electrode module terminal 414 and a first positive electrode module terminal 417. The second module terminals 415 and 418 may include a second negative electrode module terminal 415 and a second positive electrode module terminal 418.

The first module bus bar 81 electrically connects the first module terminal 414 (or 417) of one battery module 400 among the plurality of battery modules 400 and the first module terminal 417 (or 414) of another battery module 400 adjacent to the one battery module 400. The first module bus bar 81 may have a stick shape extending in the first direction. One side of the first module bus bar 81 in the longitudinal direction may be coupled to the first positive electrode module terminal 417 belonging to one of the pair of battery modules 400 by a method such as welding. The other side of the first module bus bar 81 in the longitudinal direction may be coupled to the first negative electrode module terminal 414 belonging to the other one of the pair of battery modules 400 by a method such as welding.

The second module bus bar 83 electrically connects the second module terminal 415 (or 418) of one battery module 400 among the plurality of battery modules 400 and the second module terminal 418 (or 415) of another battery module 400 adjacent to the one battery module 400. The second module bus bar 83 may have a stick shape extending in the first direction. One side of the second module bus bar 83 in the longitudinal direction may be coupled to the second negative electrode module terminal 415 belonging to one of the pair of battery modules 400 by a method such as welding. The other side of the second module bus bar 83 in the longitudinal direction may be coupled to the second positive electrode module terminal 418 belonging to the other one of the pair of battery modules 400 by a method such as welding.

The third module bus bar 86 electrically connects the first module terminal 417 (or 414) and the second module terminal 415 (or 418) of one battery module 400 among the plurality of battery modules 400. One third module bus bar 86 may be provided.

One side of the third module bus bar 86 may be coupled to a first module terminal, which is one of the first positive electrode module terminal 417 and the first negative electrode module terminal 414, of one battery module 400. The other side of the third module bus bar 86 may be coupled to a second module terminal of the second positive electrode module terminal 418 and the second negative electrode module terminal 415 of the one battery module 400 that a polarity opposite to a polarity of the first module terminal 414 or 417 coupled to the one side. The third module bus bar 86 may have a stack shape extending in a second direction. One side of the third module bus bar 86 is coupled to the first positive electrode module terminal 417 of one battery module 400 by a method such as welding. The other side of the third module bus bar 86 may be coupled to the second negative electrode module terminal 415 of the one battery module 400 by a method such as welding. However, unlike the configuration shown in FIG. 16, one side of the third module bus bar 86 may be coupled to the first negative electrode module terminal 414 of the battery module 400, and the other side of the third module bus bar 86 may be coupled to the second positive electrode module terminal 418 of the battery module 400.

The energy storage system 50 may further include a battery control unit 70 configured to control the charging and discharging of the plurality of battery modules 400. The energy storage system 50 may also include a first control unit bus bar 91 configured to electrically connect the battery control unit 70 and the first module terminal 414 (or 417) of the battery module 400 closest to the battery control unit 70 among the plurality of battery modules 400. The energy storage system 50 may also include a second control unit bus bar 93 configured to electrically connect the battery control unit 70 and the second module terminal 415 (or 418) of the battery module 400 closest to the battery control unit 70 among the plurality of battery modules 400.

The first control unit bus bar 91 and the second control unit bus bar 93 may each have a stick shape extending in the first direction. One side of the first control unit bus bar 91 in the longitudinal direction may be coupled to a first terminal 72 of the battery control unit 70 by a method such as welding. The other side of the first control unit bus bar 91 in the longitudinal direction may be coupled to the first negative electrode module terminal 414 of the battery module 400 that is closest to the battery control unit 70 by a method such as welding. One side of the second control unit bus bar 93 in the longitudinal direction may be coupled to a second terminal 74 of the battery control unit 70 by a method such as welding. The other side of the second control unit bus bar 93 in the longitudinal direction may be coupled to the second positive electrode module terminal 418 of the battery module 400 that is closest to the battery control unit 70 by a method such as welding.

The battery control unit 70 may be connected to the battery module 400, which is disposed at one end side of the plurality of battery modules 400 in the first direction, by the first control unit bus bar 91 and the second control unit bus bar 93. The third module bus bar 86 may connect the first module terminals 417 (or 414) and the second module terminal 418 (or 415) of the battery module 400 disposed at the other end side of the plurality of battery modules 400 in the first direction.

The energy storage system 50 may further include a rack 51 supporting the plurality of battery modules 400 and the battery control unit 70. The rack 51 may include a rack frame 53, a plurality of module supports 56, and a control unit support 58. The rack frame 53 may extend in the first direction and may be provided as four rack frames 53. The four rack frames 53 may be be spaced apart from each other.

The plurality of module supports 56 may be fixed to the rack frame 53 and may support the plurality of battery modules 400. The plurality of module supports 56 may be spaced apart from each other in the first direction at regular intervals. Accordingly, a plurality of layers are formed in the rack 51 in the first direction. A layer height between the pair of module supports 56 in the first direction may be greater than the size of a width of the battery module 400 in the first direction.

The control unit support 58 supports the battery control unit 70. The control unit support 58 may be located higher than the module support 56 on the uppermost layer among the plurality of module supports 56. The first direction may be a vertical direction, the second direction may be a horizontal direction orthogonal to the first direction, and a third direction may be a front/rear direction orthogonal to the first direction and the second direction.

Each of the battery modules 400 may include the plurality of first battery cells 420, the plurality of second battery cells 470, a plurality of first cell bus bars 434, a plurality of second cell bus bars 484, a pair of first cell-module bus bars 436 and 438, and a pair of second cell-module bus bars 486 and 488, all of which are accommodated in the module case 401.

Each of the first battery cells 420 may include a first cell case 421, a pair of first cell terminals 430, and an electrode assembly (not shown). The first cell case 421, the pair of first cell terminals 430, and the electrode assembly respectively have a similar configuration as the first cell case 121, the pair of first cell terminals 130, and the electrode assembly included in the first battery cell 120 according to the first embodiment described with reference to FIGS. 3 and 4. As the first cell case 121, the pair of first cell terminals 130, and the electrode assembly have been described above, repeated descriptions will be omitted.

Each of the first battery cells 420 may further include a first cell vent 428. The first cell vent 428 may be installed in a side surface of the first cell case between the pair of first cell terminals 430. The first cell vent 428 ruptures when high-temperature gas and flames are generated inside the first cell case 421 due to overcharge or abnormal operation. Emissions such as the gas and flames from the inside of the first cell case 421 may be discharged through the ruptured first cell vent 428 to the outside to outside of the battery cell 430.

According to the embodiment illustrated with reference to FIGS. 17 and 19, the plurality of first battery cells 420 may be disposed inside the module case 401 such that the pair of first cell terminals 430 protrude to one side in the second direction. In the embodiment illustrated with reference to FIG. 18, the pair of first cell terminals 430 may be disposed to protrude to the left side. The pair of first cell terminals 430 of each of the first battery cells 420 may be arranged in the third direction, i.e., in the front/rear direction.

The plurality of first battery cells 420 may be arranged in an even number of layers in the first direction, i.e., in the vertical direction, arranged in the second direction, i.e., in the horizontal direction to form a single row, and arranged in the third direction, i.e., in the front/rear direction to form a plurality of columns.

The module case 401 may be formed in a substantially rectangular parallelepiped shape. The module case 401 may include a lower plate 412, an upper plate 410, the front plate 402, a rear plate (not shown), and a pair of side plates 405. The upper plate 410 may be disposed above the lower plate 412 in the first direction. The lower plate 412 may be in contact with and supported by the module support 56. The rear plate (not shown) may be disposed on the rear side of the front plate 402 in the third direction, and the pair of side plates 405 may be spaced apart from each other in the second direction.

The plurality of first cell bus bars 434 may electrically connect the plurality of first battery cells 420. Each of the first cell bus bars 434 may connect one first cell terminal 430 of one first battery cell 420 and one first cell terminal 430 of another first battery cell 420 adjacent to the one first battery cell 420 inside the module case 401.

The first cell-module bus bar 436 or 438 may electrically connect one of the plurality of first battery cells 420 and one of the first positive electrode module terminal 417 and the first negative electrode module terminal 414. The first cell-module bus bars 436 and 438 may be provided in a pair. One of the pair of first cell-module bus bars 436 and 438 may be a first type first cell-module bus bar 436 configured to electrically connect the first negative electrode module terminal 414 of the battery module 400 and one of the pair of first cell terminals 430 of one of the plurality of first battery cells 420. The first type first cell-module bus bar 436 may be a stick-shaped member extending a predetermined width and thickness and bent at least once. One side of the first type first cell-module bus bar 436 in the longitudinal direction may be coupled to the first cell terminal 430 by a method such as welding.

The first negative electrode module terminal 414 and the first positive electrode module terminal 417 may be installed on the front plate 402 and pass through the front plate 402 in a thickness direction, i.e., in the third direction. An outer side surface of the first negative electrode module terminal 414 may protrude to the front side to be exposed to outside of the module case 401. An inner side surface of the first negative electrode module terminal 414 may protrude to the rear side in the module case 401 so as not to be exposed.

An end portion of the first module bus bar 81 or the first control unit bus bar 91 may be coupled to the outer side surface of the first negative electrode module terminal 414. A side of the first type first cell-module bus bar 436 in the longitudinal direction may be coupled to the inner side surface of the first negative electrode module terminal 414 by a method such as welding.

The other one of the pair of first cell-module bus bars 436 and 438 may be a second type first cell-module bus bar 438 configured to electrically connect the first positive electrode module terminal 417 of the battery module 400 and one of the pair of first cell terminals 430 of one of the plurality of first battery cells 420. The second type first cell-module bus bar 438 may be a stick-shaped member extending a predetermined width and thickness and bent at least once. One side of the second type first cell-module bus bar 438 in the longitudinal direction may be coupled to the first cell terminal 430 by a method such as welding.

An outer side surface of the first positive electrode module terminal 417 may protrude to the front side to be exposed to the outside of the module case 401. An inner side surface of the first positive electrode module terminal 417 may protrude to the rear side in the module case 401 so as not to be exposed.

An end portion of the first module bus bar 81 or the third module bus bar 86 may be coupled to the outer side surface of the first positive electrode module terminal 417. The other side of the second type first cell-module bus bar 438 in the longitudinal direction may be coupled to the inner side surface of the first positive electrode module terminal 417 by a method such as welding.

Each of the second battery cells 470 may include a second cell case 471, a pair of second cell terminals 480, and an electrode assembly (not shown). The second cell case 471, the pair of second cell terminals 480, and the electrode assembly respectively have a similar configuration as the first cell case 121, the pair of first cell terminals 130, and the electrode assembly included in the first battery cell 120 according to the first embodiment described above with reference to FIGS. 3 and 4. As the first cell case 121, the pair of first cell terminals 130, and the electrode assembly have been described above, repeated descriptions will be omitted.

Each of the second battery cells 470 may further include a second cell vent 478. The second cell vent 478 may be installed in a side surface of the second cell case between the pair of second cell terminals 480. The second cell vent 478 ruptures when high-temperature gas and flames are generated inside the second cell case 471 due to overcharge or abnormal operation. Emissions such as the gas and flames from the inside of the second cell case 471 may be discharged through the ruptured second cell vent 470 to outside of the second battery cell 470.

According to the embodiment illustrated with reference to FIGS. 17 and 19, the plurality of second battery cells 470 may be disposed inside the module case 401 such that the pair of second cell terminals 480 protrude to one side in the second direction. In the embodiment shown in FIG. 19, the pair of second cell terminals 480 may be disposed to protrude to the right side. The pair of second cell terminals 480 of each of the second battery cells 470 may be arranged in the third direction, i.e., in the front/rear direction.

The plurality of second battery cells 470 may be arranged in an even number of layers in the first direction, i.e., in the vertical direction, arranged in the second direction, i.e., in the horizontal direction to form a single row, and arranged in the third direction, i.e., in the front/rear direction to form a plurality of columns. The plurality of first battery cells 420 and the plurality of second battery cells 470 may be arranged to be opposite to each other in the horizontal direction in the module case 401.

The plurality of second cell bus bars 484 may electrically connect the plurality of second battery cells 470. Each of the second cell bus bars 484 may connect one second cell terminal 480 of one second battery cell 470 and one second cell terminal 480 of another second battery cell 470 that is adjacent to the one second battery cell 470 inside the module case 401.

The second cell-module bus bar 486 or 488 may electrically connect one of the plurality of second battery cells 470 and one of the second positive electrode module terminal 418 and the second negative electrode module terminal 415. The second cell-module bus bars 486 and 488 may be provided in a pair. One of the pair of second cell-module bus bars 486 and 488 may be a first type second cell-module bus bar 486 configured to electrically connect the second negative electrode module terminal 415 of the battery module 400 and one of the pair of second cell terminals 480 of one of the plurality of second battery cells 470.

The first type second cell-module bus bar 486 may be a stick-shaped member extending a predetermined width and thickness and bent at least once. One side of the first type second cell-module bus bar 486 in the longitudinal direction may be coupled to the second cell terminal 480 by a method such as welding.

The second negative electrode module terminal 415 and the second positive electrode module terminal 418 may be installed on the front plate 402 and pass through the front plate 402 in the thickness direction, i.e., in the third direction. An outer side surface of the second negative electrode module terminal 415 may protrude to the front side and be exposed to the outside of the module case 401. An inner side surface of the second negative electrode module terminal 415 may protrude to the rear side in the module case 401 so as not to be exposed.

An end portion of the second module bus bar 83 or the third module bus bar 86 may be coupled to the outer side surface of the second negative electrode module terminal 415. A side of the first type second cell-module bus bar 486 in the longitudinal direction may be coupled to the inner side surface of the second negative electrode module terminal 415 by a method such as welding.

The other one of the pair of second cell-module bus bars 486 and 488 may be a second type second cell-module bus bar 488 configured to electrically connect the second positive electrode module terminal 418 of the battery module 400 and one of the pair of second cell terminals 480 of one of the plurality of second battery cells 470. The second type second cell-module bus bar 488 may be a stick-shaped member extending a predetermined width and thickness and bent at least once. One side of the second type second cell-module bus bar 488 in the longitudinal direction may be coupled to the second cell terminal 480 by a method such as welding.

An outer side surface of the second positive electrode module terminal 418 may protrude to the front side to be exposed to outside of the module case 401. An inner side surface of the second positive electrode module terminal 418 may protrude to the rear side in the module case 401 so as not to be exposed.

An end portion of the second module bus bar 83 or the second control unit bus bar 93 may be coupled to the outer side surface of the second positive electrode module terminal 418. A side of the second type second cell-module bus bar 488 in the longitudinal direction may be coupled to the inner side surface of the second positive electrode module terminal 418 by a method such as welding.

The plurality of first battery cells 420 and the plurality of second battery cells 470 may not be electrically connected to each other inside the module case 401.

The module case 401 may include a module vent 419 that opens in the second direction or in the third direction. A plurality of module vents 419 facing the first cell vents 428 of the first battery cells 420 and the second cell vents 478 of the second battery cells 470 are formed in the module case 401. The number of module vents 419 may correspond one-to-one to the number of first cell vents 428 and the second cell vents 478. The plurality of module vents 419 may be formed on both side plates 405 of the module case 401. The module vent 419 may be a through hole passing through the side plate 405 in the thickness direction.

When an abnormal phenomenon such as overheating and ignition occurs in one battery cell 420 or 470 among the plurality of battery cells 420 and 470 inside the module case 401, high-temperature emissions such as high-temperature gas and flames are discharged from the first or second cell vent 428 or 478 of the battery cell 420 or 470. The high-temperature emissions discharged from the first or second cell vent 428 or 478 may be discharged to the outside of the module case 401 through the module vent 419 facing the first or second cell vent 428 or 478.

Referring to FIG. 17, the first positive electrode module terminal 417 and the first negative electrode module terminal 414 of the battery module 400 may be disposed on one side of the battery module 400 in the second direction crossing the first direction. The second positive electrode module terminal 418 and the second negative electrode module terminal 415 of the battery module 400 may be disposed on the other side of the battery module 400 in the second direction. For example, the first positive electrode module terminal 417 and the first negative electrode module terminal 414 may be disposed on the left side of the front plate 402 of the module case 401, and the second positive electrode module terminal 418 and the second negative electrode module terminal 415 may be disposed on the right side of the front plate 402 of the module case 401.

The battery module 400 in which the module case 401 is such that when it is rotated 180° such that one side surface and the other side surface of the module case 401 spaced apart from each other in the first direction are reversed, the battery module 400 is the same as the battery module 400 as before it is rotated. In other words, the battery module 400 may be symmetrically shaped with respect to the center of the front plate 402.

According to an embodiment of the present disclosure, the overall length of bus bars connecting a plurality of battery modules can be reduced. In addition, the length of a bus bar connecting a battery control unit and one of the plurality of battery modules can be reduced. Thus, manufacturing costs of an energy storage system can be reduced, and power consumption can be reduced due to a decreased electrical resistance of bus bars.

According to an embodiment of the present disclosure, electrical resistance of bus bars connecting a plurality of battery modules can be evenly distributed, thereby preventing imbalances in resistance distribution.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. An energy storage system (10) comprising:
a battery module stack (S) including a plurality of first battery modules (100, 300) and a plurality of second battery modules (150, 350) alternately arranged in a first direction;
a first module bus bar (31) configured to electrically connect a pair of the first battery modules (100, 300) that are disposed adjacent to each other with one of the second battery modules (150, 350) interposed therebetween;
a second module bus bar (33) configured to electrically connect a pair of the second battery modules (150, 350) disposed adjacent to each other with one of the first battery modules (100, 300) interposed therebetween; and
a third module bus bar (36) configured to electrically connect one of the first battery modules (100, 300) and one of the second battery modules (150, 350) that are arranged adjacent to each other.

2. The energy storage system (10) of claim 1, further comprising:
a battery control unit (20) configured to control charging and discharging of the battery module stack;
a first control unit bus bar (41) configured to electrically connect the battery control unit (20) and one of the first battery modules (100, 300) that is closest to the battery control unit (20) among the plurality of first battery modules (100, 300); and
a second control unit bus bar (43) configured to electrically connect the battery control unit (20) and one of the second battery modules (150, 350) that is closest to the battery control unit (20, 70) among the plurality of second battery modules (150, 350).

3. The energy storage system (10) of claim 2, wherein the battery control unit (20, 70) is positioned outside the battery module stack in the first direction, and
wherein the third module bus bar (36) connects a first battery module (100, 300) of the plurality of first battery modules (100, 300) that is farthest from the battery control unit (20, 70) and a second battery module (150, 350) of the plurality of second battery modules (150, 350) that is farthest from the battery control unit (20).

4. The energy storage system (10) of any of the preceding claims, wherein each of the first battery modules (100, 300) includes a first positive electrode module terminal (117, 317) and a first negative electrode module terminal (114, 314),
wherein each of the second battery modules (150, 350) includes a second positive electrode module terminal (167, 367) and a second negative electrode module terminal (164, 364),
wherein the energy storage system includes a plurality of the first module bus bars (31) and each of the first module bus bars (31) connects the first positive electrode module terminal (117, 317) of one of the pair of first battery modules (100, 300) disposed adjacent to each other with one second battery module (150, 350) interposed therebetween to the first negative electrode module terminal (114, 314) of the other one of the pair of first battery modules (100, 300), and
wherein the energy storage system includes a plurality of the second module bars and each of the second module bus bars (33) connects the second positive electrode module terminal (167, 367) of one of the pair of second battery modules (150, 350) disposed adjacent to each other with one first battery module (100, 300) interposed therebetween to the second negative electrode module terminal (164, 364) of the other one of the pair of second battery modules (150, 350).

5. The energy storage system (10) of claim 4, wherein each of the first positive electrode module terminals (117, 317) and the first negative electrode module terminals (114, 314) are disposed on one side of the first battery modules (100, 300) in a second direction crossing the first direction, and
wherein each of the second positive electrode module terminals (167, 367) and the second negative electrode module terminals (164, 364) are disposed on the other side of the second battery modules (150, 350) in the second direction.

6. The energy storage system (10) of claim 4 or 5, wherein each of the first battery modules (100, 300) further includes a first module case (101, 301) on which the first positive electrode module terminal (117, 317) and the first negative electrode module terminal (114, 314) are provided,
wherein each of the second battery modules (150, 350) further includes a second module case (151, 351) on which the second positive electrode module terminal (167, 367) and the second negative electrode module terminal (164, 364) are provided, and
wherein the first battery module (100, 300) is the same as the second battery module (150, 350) if the first battery module (100, 300) is rotated (90) by 180° such that a first side surface and a second side surface of the first module case (101, 301) spaced apart from each other in the first direction are reversed.

7. The energy storage system (10) of claim 4, wherein each of the first battery modules (100, 300) further includes:
a first module case (101, 301) on which the first positive electrode module terminal (117, 317) and the first negative electrode module terminal (114, 314) are provided;
a plurality of first battery cells (120, 220, 320) accommodated in the first module case (101, 301);
a plurality of first cell bus bars (134, 234, 334) configured to electrically connect the plurality of first battery cells (120, 220, 320); and
a first cell-module bus bar (136, 138, 236, 238, 336, 338) configured to electrically connect one of the plurality of first battery cells (120, 220, 320) and one of the first positive electrode module terminal (117, 317) and the first negative electrode module terminal (114, 314).

8. The energy storage system (10) of claim 7, wherein the first module case (101, 301) includes a first module vent (319) that opens in a second direction crossing the first direction.

9. The energy storage system (10) of claim 4, 7, or 8, wherein each of the second battery modules (150, 350) further includes:
a second module case (151, 351) on which the second positive electrode module terminal (167, 367) and the second negative electrode module terminal (164, 364) are provided;
a plurality of second battery cells (170, 270, 370) accommodated in the second module case (151, 351);
a plurality of second cell bus bars (184, 284, 384, 484) configured to electrically connect the plurality of second battery cells (170, 270, 370); and
a second cell-module bus bar (186, 188, 286, 288, 386, 388) configured to electrically connect one of the plurality of second battery cells (170, 270, 370) and one of the second positive electrode module terminal (167, 367) and the second negative electrode module terminal (164, 364).

10. The energy storage system (10) of claim 9, wherein the second module case (151, 351) includes a second module vent (369) that opens in a second direction crossing the first direction.

11. An energy storage system (50) comprising:
a plurality of battery modules (400) arranged in a first direction, each of the plurality of battery modules (400) including a first module terminal (414, 417) and a second module terminal (415, 418);
a first module bus bar (81) configured to electrically connect the first module terminal (414, 417) of a first battery module of the plurality of battery modules (400) and the first module terminal (414, 417) of a second battery module of the plurality of battery modules (400) that is adjacent to the first battery module;
a second module bus bar (83) configured to electrically connect the second module terminal (415, 418) of the first battery module and the second module terminal (415, 418) of the second battery module; and
a third module bus bar (86) configured to electrically connect the first module terminal (414, 417) and the second module terminal (415, 418) of a third battery module (400) of the plurality of battery modules (400).

12. The energy storage system (50) of claim 11, further comprising:
a battery control unit (20, 70) configured to control charging and discharging of the plurality of battery modules (400);
a first control unit bus bar (91) configured to electrically connect the first module terminal (414, 417) of one of the battery modules (400) that is closest to the battery control unit (70) to the battery control unit (70); and
a second control unit bus bar (93) configured to electrically connect the second module terminal (415, 418) of the one of the battery modules (400) that is closest to the battery control unit (70) to the battery control unit (70).

13. The energy storage system (50) of claim 11 or 12, wherein the first module terminal (414, 417) is disposed on one side of the battery module (400) in a second direction crossing the first direction, and
wherein the second module terminal (415, 418) is disposed on the other side of the battery module (400) in the second direction.

14. The energy storage system (50) of any of claims 11 to 12, wherein the first module terminal (414, 417) includes a first positive electrode module terminal and a first negative electrode module terminal,
wherein the second module terminal (415, 418) includes a second positive electrode module terminal and a second negative electrode module terminal,
wherein the first module bus bar (81) connects the first positive electrode module terminal of the first battery module and the first negative electrode module terminal of the second battery module, and
wherein the second module bus bar (83) connects the second negative electrode module terminal of the first battery module and the second positive electrode module terminal of the second battery module.

15. The energy storage system (50) of claim 14, wherein each of the battery modules (400) includes:
a module case (401) on which the first positive electrode module terminal, the first negative electrode module terminal, the second positive electrode module terminal, and the second negative electrode module terminal are provided;
a plurality of first battery cells (420) and a plurality of second battery cells accommodated in the module case (401);
a plurality of first cell bus bars (434) configured to electrically connect the plurality of first battery cells (420);
a plurality of second cell bus bars (484) configured to electrically connect the plurality of second battery cells;
a first cell-module bus bar (436, 438) configured to electrically connect one of the plurality of first battery cells (420) to one of the first positive electrode module terminal and the first negative electrode module; and
a second cell-module bus bar (486, 488) configured to electrically connect one of the plurality of second battery cells to one of the second positive electrode module terminal and the second negative electrode module terminal.
